# FASCICULE DE BREVET EUROPEEN

(11) **EP 0 579 517 B1**
(45) Date de publication et mention de la délivrance du brevet: **02.04.1997**
(21) Numéro de dépôt: 93401200.6
(22) Date de dépôt: 11.05.1993
(51) Int. Cl.: C03B 37/018

(54) **Procédé d'élaboration d'une préforme pour fibre optique**
Verfahren zum Herstellen einer Vorform für optische Fasern
Process for making a preform for optical fibre

(30) Priorité: 13.05.1992 FR 9205811
(43) Date de publication de la demande: 19.01.1994
(73) Titulaire: ALCATEL N.V., NL-1077 XX Amsterdam (NL)
(72) Inventeur: Dumas, Jean-Pierre, F-91360 Villemoisson sur Orge (FR); Belouet, Christian, F-92330 Sceaux (FR)
(74) Mandataire: Laroche, Danièle

(56) Documents cités:
- EP-A- 0 383 301
- EP-A- 0 406 796
- DE-A- 2 402 270
- DE-A- 3 419 275
- GB-A- 2 174 384
- PATENT ABSTRACTS OF JAPAN vol. 9, no. 237 (C-305)24 Septembre 1985 & JP-A-60 096 537 (NIPPON DENKI KK) 30 Mai 1985
- JAPANESE JOURNAL OF APPLIED PHYSICS vol. 30, no. 8B, Août 1991, TOKYO JP pages L1498 - L1500 K. FUJIURA ET AL
- JAPANESE JOURNAL OF APPLIED PHYSICS vol. 28, no. 1, Janvier 1989, TOKYO JP pages L147 - L149 K. FUJIURA ET AL
- JOURNAL OF MATERIALS RESEARCH vol. 5, no. 5, Mai 1990, NEW YORK US pages 1092 - 1094 P.J. MELLING

## Description

La présente invention concerne un procédé d'élaboration d'une préforme pour fibre optique ultratransparente ou amplificatrice à base de verres fluorés, du genre ZBLAN (verres fluorés à base de ZrF₄ - BaF₂ - LaF₃ - AlF₃ - NaF) ou BIZYT (verres fluorés à base de BaF₂ - InF₃ - ZnF₂ - YbF₃ - ThF₄) par exemple, pour utilisation dans les télécommunications optiques.

A l'heure actuelle ces fibres présentent un taux d'atténuation de 0,65 dB/km sur 110 mètres, pour un signal de longueur d'onde 1,55 µm; le but est d'approcher le taux d'atténuation théorique de 0,01 à 0,02 dB/km sur des distances de plusieurs dizaines, voire centaines de kilomètres.

Les atténuations élevées mesurées aujourd'hui sont notamment attribuées à des défauts extrinsèques introduits, soit lors de la préparation des matériaux de départ, soit lors de l'élaboration du verre devant constituer le coeur ou la gaine optique de la fibre.

Les procédés usuels d'élaboration du verre sont principalement fondés sur la technique du bain fondu dans un creuset.

Compte tenu du caractère réactif des fluorures mis en oeuvre, l'élaboration en creuset se traduit par deux phénomènes aux conséquences négatives :
- L'incorporation dans le verre d'impuretés issues du creuset absorbantes et diffusantes.
- La stimulation de la nucléation hétérogène résultant des interactions chimiques entre les parois du creuset et le verre avec in fine la formation dans le verre de cristallites de grande dimension (taille caractéristique de l'ordre du micromètre) qui sont des sources de diffusion intenses.

Le bilan de ces "défauts" d'élaboration est donc pour la fibre optique obtenue un taux d'atténuation très éloigné des limites théoriques.

Pour éviter la mise en oeuvre d'un bain fondu on a déjà proposé, pour fabriquer une préforme pour fibre optique en verre fluoré, la technique sol-gel de dépôt à l'intérieur d'un tube support, technique basée sur l'utilisation de précurseurs carbonés qui sont des complexes organiques à base de β-dicétones des métaux constituant le verre. On peut se référer à l'article "sol-gel preparation of amorphous ZBLAN heavy metal fluoride powders" de P.J. Melling et M.A. Thomson, J. Mater. Res. vol 5, N° 5 (1990) 1092 et D.R. Ulrich, NATO ASI, Sci, Ser. E123 (1987), 385.

On constate que ce procédé n'apporte pas l'amélioration souhaitée, notamment parce que l'on se heurte au problème de l'élimination complète du carbone et de l'oxygène qui proviennent des précurseurs.

On connaît également les procédés de dépôt en phase vapeur (Chemical Vapour Deposition CVD) à l'intérieur d'un tube support, qui mettent également en oeuvre les mêmes précurseurs oxy-carbonés avec les mêmes difficultés d'élimination du carbone et de l'oxygène que dans le procédé précité. Les documents suivants décrivent de tels procédés :
- "Organometallic Chemical Vapour Deposition of ZrF4 - based fluoride glasses", K. Fujiura, Y. O kishi, S.Takahashi, Jpn. Appl. Phys. 28-1 (1989).
- "Preparation and properties of ZrF4 based fluoride glass films by plasma enhanced Chemical Vapour Deposition" K. Fujiura, Y. Nishida, R. Kobaysahi et S.Takahashi, Jpn. J. Appl. phys. 30-8B (1991) L1498.

On connaît enfin le document DE-A-24 02 270 qui décrit un procédé d'élaboration d'une préforme pour fibre optique, selon lequel on dépose une pluralité de couches en verres à l'intérieur d'un tube support, ces couches étant déposées par ablation laser sous atmosphère contrôlée à partir d'une cible ayant la composition du verre, animée d'un mouvement de va-et-vient parallèlement à l'axe du tube. La température de l'enceinte où est effectuée ladite ablation n'est pas contrôlée.

La présente invention a pour but de réaliser une préforme pour fibre optique en verre fluoré, sans utilisation de creuset et permettant d'éviter le problème des précurseurs carbones.

La présente invention propose à cet effet un procédé d'élaboration d'une préforme pour fibre optique selon lequel on dépose une pluralité de couches en verre à l'intérieur d'un tube support, lesdites couches étant déposées par ablation laser sous atmosphère contrôlée à partir d'une cible ayant la composition dudit verre, animée d'un mouvement de va-et-vient parallèlement à l'axe dudit tube, dans lequel lesdites couches sont à base de verre fluoré, la température de l'enceinte où est effectuée ladite ablation est inférieure ou égale à la température de transition vitreuse Tg dudit verre, et ledit laser émet dans l'ultra-violet dans la gamme comprise entre 200 et 300 nanomètres.

Selon l'invention on adapte donc une méthode de dépôt par transport physique, et non chimique, des espèces de la cible. La composition du panache issu de l'irradiation laser et celle de la couche déposée sont identiques à celle de la cible. Dans un tel processus, il ne s'instaure pas de régime d'évaporation des espèces chimiques à partir d'un bain fondu qui serait réalisé consécutivement au tir laser. Pour éviter une telle situation, il est préférable de choisir les paramètres suivants:
- densité de l'énergie laser supérieure à 1 Joule/cm²,
- durée de l'impulsion laser inférieure ou égale à 30 nanosecondes.

Le fait que le laser ait une longueur d'onde courte permet une pénétration de l'impulsion laser confinée au voisinage de la surface de la cible, c'est-à-dire à l'échelle micrométrique.

En outre ce dernier phénomène est favorisé par le choix d'une densité de cible aussi élevée que possible, autrement dit une densité relative au moins égale à 92%. Ainsi la pénétration du faisceau dans la cible est réduite en utilisant une poudre frittée et de composition homogène réalisée à partir d'un verre broyé, dont la granulométrie est centrée autour de 1 micromètre.

Le procédé selon l'invention peut être mis en oeuvre pour réaliser les couches de coeur de la préforme, mais aussi les couches de gaine proches des couches de coeur. Cette solution permet d'éviter les défauts à l'interface gaine-coeur.

D'autres caractéristiques et avantages de la présente invention apparaîtront au cours de la description suivante d'un mode de réalisation donné à titre illustratif mais nullement limitatif.

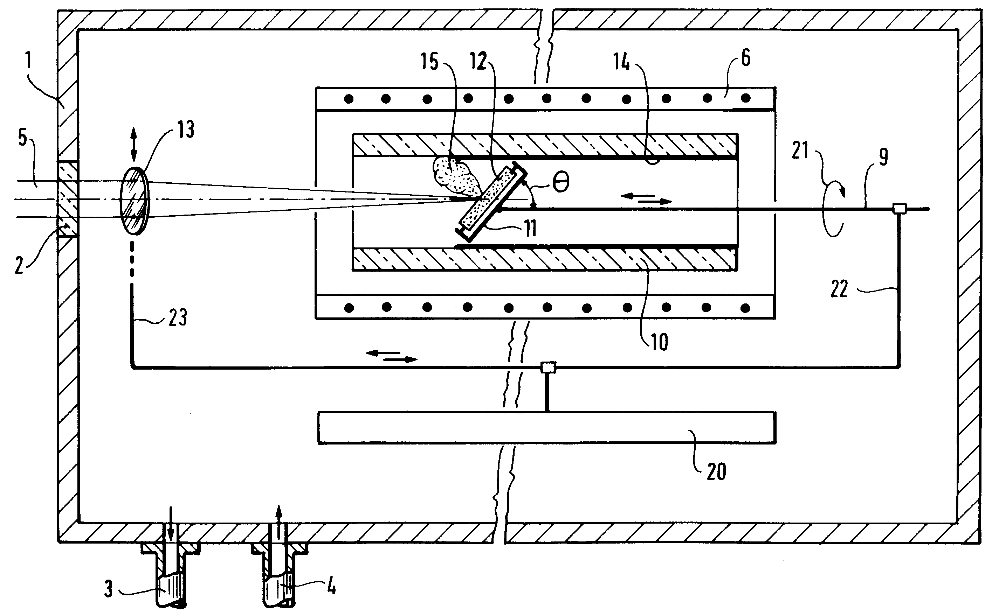

Le dessin annexé montre un schéma de mise en oeuvre du procédé selon l'invention.

L'opération est effectuée dans une enceinte 1 munie d'un hublot 2 transparent pour l'entrée d'un faisceau laser 5, d'un équipement à vide schématisé par la référence 3, et d'arrivées de gaz 4. Il est nécessaire également de prévoir un équipement de contrôle du taux de poussière et de l'hygroscopie, car le taux de H₂0 doit être inférieur ou au plus égal à 1 ppm. On a référencé 6 un four tubulaire à l'intérieur duquel est disposé un tube support 10 en verre fluoré, réalisé par des moyens classiques, et que l'on suppose destiné à former le verre de gaine optique d'une fibre monomode. Sa composition est la suivante: ZrF₄: 54% ; BaF₂: 20% ; LaF₃: 4% ; AlF₃: 4% ; NaF: 19%.

Sur un porte-cible 11 incliné d'un angle θ par rapport à l'axe 9 du tube 10 est montée une cible 12.

Le porte-cible 11 est muni de moyens mécaniques schématisés par la flèche 21 pour lui imprimer un mouvement de rotation autour de l'axe 9, ainsi que de moyens mécaniques 20, 22 susceptibles de l'entraîner en translation le long du même axe 9.

Une lentille 13 ou tout moyen équivalent permet de focaliser le faisceau 5 sur la cible 12. Des moyens mécaniques 20, 23 permettent d'assurer sa translation parallèlement à l'axe 9 en synchronisation avec le mouvement du porte-cible 11. En outre, des moyens non illustrés sont prévus pour déplacer l'impact du faisceau laser sur la cible. Ainsi le panache 15 issu de la cible 12 balaie-t-il de manière homogène l'intérieur du tube 10.

Le hublot 2 et la lentille 13 sont par exemple en silice vendue sous la marque "SUPRASIL II" qualité UV.

Pour réaliser une couche 14 en verre fluoré de type ZBLAN destinée à former après rétreint et fibrage le coeur d'une fibre monomode, on opère de la manière suivante.

La cible 12 est un compact pressé de poudres de matériaux cristallisés avec la composition suivante: ZrF₄: 54% ; BaF₂: 23% ; LaF₃: 4% ; AlF₃: 3% ; NaF: 16%.

La taille caractéristique des grains est de l'ordre de 1µm. La compression est effectuée dans des conditions rigoureuses d'hygrométrie afin de prévenir l'incorporation d'eau dans la poudre; le taux de H₂0 doit être inférieur à quelques ppm dans l'enceinte de pressage. L'atmosphère de pressage est un gaz neutre; on prend toutes les précautions nécessaires pour éliminer au mieux l'oxygène car l'oxygène, comme l'eau, est un facteur de dégradation des performances des verres fluorés. La densité de la cible est supérieure à 92%.

Le laser d'ablation émettant le faisceau 5 est un laser à excimère du type Xe₂Cl₂ ou Kr₂F₂, Ar₂F₂. Ces lasers UV opèrent à des longueurs d'onde de 308, 248 et 193 nm respectivement.

Il est avantageux d'utiliser le laser 193 nm sous atmosphère réduite (pression totale < 1 Torr) et contenant des espèces fluorées, par exemple NF₃ ou SF₆, pour garantir le taux de fluor dans le verre déposé.

Les conditions opératoires requises sont les suivantes:

| | |
|---|---|
| . longueur d'onde du laser | λ = 193 nm |
| . énergie des impulsions | > 1 J/cm² |
| . fréquence de tirs | 1 à 150 Hz |
| . durée des impulsions | ≤ 30 ns |
| . température du tube 10 inférieure à la température de transition vitreuse Tg du verre fluoré | 270°C |
| . diamètre intérieur du tube 10 | 15 mm |
| . vitesse linéaire du porte-cible 11 le long de l'axe 9 | 2 mm/minute. |
| . longueur du segment qui relie la normale au point d'impact laser sur la cible, à la paroi du tube | de l'ordre de 5 cm |
| . pression de NF₃ | ajustable entre 0,1 et 0,3 mbar. |

Dans ces conditions le panache 15 issu de la cible irradiée 12 permet d'effectuer le dépôt d'une couche 14 à l'état vitreux, de 2 µm d'épaisseur, ayant une composition identique à celle de la cible 12. La vitesse de dépôt est de l'ordre de 3x10⁻³ mm³ par seconde.

Le tube 10 et sa couche 14 subissent ensuite un rétreint et forment ainsi une préforme directement utilisable pour l'opération de fibrage. La différence d'indice optique entre le coeur et la gaine est de 5x10⁻³.

Bien entendu la présente invention n'est pas limitée au mode de réalisation qui vient d'être décrit. On pourra, sans sortir du cadre de l'invention, remplacer tout moyen par un moyen équivalent. Si l'on souhaite réaliser un profil d'indice dans le coeur de la fibre, il est possible de déposer successivement des couches de compositions différentes et d'épaisseurs appropriées afin de réaliser le profil d'indice recherché, comme cela est effectué par ailleurs par d'autres techniques, par exemple OMCVD. Il suffit pour cela de remplacer la cible 12 par une série de cibles dont les compositions soient adaptées aux valeurs d'indice souhaitées.

Le procédé selon l'invention s'applique à des verres de composition très complexes qui, avec les dopants actifs comme Pr, Nd ou des substituants passifs pour l'ajustement de l'indice, par exemple Pb, Li, dans le ZBLAN, peuvent contenir jusqu'à 7 ou 8 cations.

## Revendications

1. Procédé d'élaboration d'une préforme pour fibre optique selon lequel on dépose une pluralité de couches en verre (14) à l'intérieur d'un tube support (10), lesdites couches étant déposées par ablation laser (5) sous atmosphère contrôlée à partir d'une cible (11) ayant la composition dudit verre, animée d'un mouvement de va-et-vient parallèlement à l'axe dudit tube (10), dans lequel lesdites couches (14) sont à base de verre fluoré, la température de l'enceinte (1) où est effectuée ladite ablation est inférieure ou égale à la température de transition vitreuse Tg dudit verre, et ledit laser émet dans l'ultra-violet dans la gamme comprise entre 200 et 300 nanomètres.

2. Procédé d'élaboration selon la revendication 1, caractérisé par le fait que ladite cible (11) présente une densité relative au moins égale à 92%, et qu'elle est constituée d'une poudre compactée dudit verre fluoré avec une granulométrie telle que les grains aient une taille de l'ordre de 1 µm.

3. Procédé selon la revendication 2, caractérisé par le fait que ledit laser est un laser excimère de type Xe₂Cl₂ ou Kr₂F₂, Ar₂F₂.

4. Procédé selon l'une des revendications précédentes caractérisé par le fait que ledit verre fluoré est choisi parmi les verres ZBLAN et les verres BIZYT.

5. Procédé selon la revendication 3, caractérisé par le fait que l'énergie des impulsions laser est supérieure à 1 Joule/cm², et que la durée de ces impulsions est inférieure ou égale à 30 nanosecondes.

6. Procédé selon la revendication 5, caractérisé par le fait que la fréquence desdites impulsions est comprise entre 1 et 150 Hz.

7. Procédé selon la revendication 1, caractérisé par le fait que ladite atmosphère contrôlée comprend un fluorure gazeux, choisi parmi NF₃ et SF₆, dont la pression est ajustable dans la gamme O,1 mbar à 0,3 mbar.

## Claims

1. A method of making a preform for an optical fiber, in which method a plurality of layers of glass (14) are deposited inside a support tube (10), said layers being deposited by laser ablation (5) in a controlled atmosphere using a target (11) having the composition of said glass, which target is moved back-and-forth parallel to the axis of said tube (10), in which said layers (14) are based on fluoride glass, the temperature of the enclosure (1) in which said ablation is performed is not greater than the vitreous transition temperature Tg of said glass, and said laser emits in the ultraviolet range of 200 nanometers to 300 nanometers.

2. A method according to claim 1, characterized by the facts that said target has a relative density of not less than 92%, and that said target (11) is constituted by said fluoride glass in compacted powder form, with grain-size such that the size of the grains is of the order of 1 µm.

3. A method according to claim 2, characterized by the fact that said laser is an excimer laser of the Xe₂Cl₂ or Kr₂F₂, Ar₂F₂ type.

4. A method according to any preceding claim, characterized by the fact that said fluoride glass is chosen from ZBLAN glass and BIZYT glass.

5. A method according to claim 3, characterized by the facts that the energy of the laser pulses is greater than 1 joule/cm², and that the duration of the pulses is not greater than 30 nanoseconds.

6. A method according to claim 5, characterized by the fact that the frequency of said pulses lies in the range 1 Hz to 150 Hz.

7. A method according to claim 1, characterized by the fact that said controlled atmosphere includes a gaseous fluoride chosen from NF₃ and SF₆, and whose pressure is adjustable in the range 0.1 mbars to 0.3 mbars.

## Patentansprüche

1. Verfahren zur Herstellung eines Rohlings für eine Lichtleitfaser, bei dem mehrere Glasschichten (14) durch einen Laser (5) in kontrollierter Atmosphäre in einem Trägerrohr (10) mittels Abtragen von einem Target (11) mit der Zusammensetzung des Glases abgeschieden werden, wobei das Target parallel zur Achse des Rohrs (10) hin- und herbewegt wird und die Schichten (14) aus fluoriertem Glas sind, wobei die Temperatur in dem Gefäß (1), in dem die Abtragung erfolgt, höchstens der Temperatur Tg des Übergangs des Glases in den glasartigen Zustand gleicht und der Laser im Ultraviolettbereich zwischen 200 und 300 nm emittiert.

2. Verfahren nach Anspruch 1, dadurch gekennzeichnet, daß das Target (11) eine relative Dichte von mindestens 92% aufweist und aus einem komprimierten Pulver des fluorierten Glases mit einer Korngröße von etwa 1 mm gebildet wird.

3. Verfahren nach Anspruch 2, dadurch gekennzeichnet, daß der Laser ein Excimer-Laser vom Typ Xe₂Cl₂ oder Kr₂F₂, Ar₂F₂ ist.

4. Verfahren nach einem der vorhergehenden Ansprüche, dadurch gekennzeichnet, daß das fluorierte Glas unter den ZBLAN-Gläsern und den BIZYT-Gläsern ausgewählt wird.

5. Verfahren nach Anspruch 3, dadurch gekennzeichnet, daß die Energie der Laserimpulse größer als 1 J/cm² ist und daß die Dauer dieser Impulse höchstens 30 ns beträgt.

6. Verfahren nach Anspruch 5, dadurch gekennzeichnet, daß die Wiederholfrequenz der Impulse zwischen 1 Hz und 150 Hz liegt.

7. Verfahren nach Anspruch 1, dadurch gekennzeichnet, daß die kontrollierte Atmosphäre ein gasförmiges Fluorid enthält, das unter NF₃ und SF₆ ausgewählt wird, wobei der Druck im Bereich zwischen 0,1 mbar und 0,3 mbar einstellbar ist.
